(19) **Europäisches Patentamt European Patent Office Office européen des brevets**

(11) **EP 2 221 635 B1**

(12) **FASCICULE DE BREVET EUROPEEN**

(45) Date de publication et mention
de la délivrance du brevet:
**07.06.2017 Bulletin 2017/23**

(51) Int Cl.:
***G01S 15/93*** *(2006.01)* ***G01S 15/87*** *(2006.01)*
*G01S 13/93* *(2006.01)*

(21) Numéro de dépôt: **10151268.9**

(22) Date de dépôt: **21.01.2010**

(54) **Procédé de surveillance de l'environnement d'un vehicule automobile**

Verfahren zur Überwachung der Umgebung eines Kraftfahrzeugs

Method for monitoring the environment of an automobile

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.01.2009 FR 0900382**

(43) Date de publication de la demande:
**25.08.2010 Bulletin 2010/34**

(73) Titulaire: **Valeo Vision**
**93012 Bobigny (FR)**

(72) Inventeur: **Groult, Xavier**
**95470, SURVILLIERS (FR)**

(56) Documents cités:
**EP-A- 1 332 910** **WO-A-98/32030**
**US-A- 5 461 357** **US-A1- 2006 267 748**

## Description

La présente invention concerne un procédé de surveillance d'un environnement d'un véhicule apte à se déplacer selon une trajectoire, et un dispositif de détection permettant de mettre en oeuvre ledit procédé.

Elle trouve une application particulière dans le domaine des véhicules automobiles.

Dans le domaine des véhicules automobiles, un état de la technique antérieur connu de procédé de surveillance d'un environnement d'un véhicule apte à se déplacer selon une trajectoire, utilise des capteurs de détection spécifiques tels que des capteurs à ultrasons couramment dénommés en anglais « UPA » pour « Ultrasonic Park Assist » pour détecter un objet cible, tel qu'un piéton ou un véhicule croisé, et effectuer un freinage automatique pour éviter une collision par exemple.

Le document EP1332910, divulgue un procédé permettant la détection de véhicules au moyen de capteurs ultrasons et permet de donner des commandes de freinage ou d'accélération pour permettre un changement de voie. Ce procédé évalue notamment les risques de collision en fonction de la distance et de la vitesse.

Un inconvénient de cet état de la technique antérieur est que de tels capteurs n'étant pas des capteurs directionnels, ils ne permettent pas de vérifier si un obstacle se situe sur la trajectoire du véhicule. Ainsi, cela entraîne des décisions concernant le freinage automatique qui ne sont pas toujours adéquates. Par exemple dans le cas où le véhicule considéré croise un autre véhicule qui se situe sur le côté, un freinage intempestif pourrait être déclenché alors que le véhicule croisé n'est pas gênant.

Le document US2006/0267748 divulgue également un système permettant la détection de trafic à une intersection et le freinage en cas de risque de collision. Il procède à une évaluation de trajectoire au moyen de la distance inter-véhicules et des paramètres de déplacement. Il divulgue également l'utilisation de l'angle au volant mais sans expliciter comment elle est mise en oeuvre.

La présente invention a pour but un procédé de surveillance d'un environnement d'un véhicule apte à se déplacer selon une trajectoire, qui permet de résoudre le problème cité ci-dessus.

Selon un premier objet de l'invention, ce but est atteint par un procédé de surveillance d'un environnement d'un véhicule apte à se déplacer selon une trajectoire, caractérisé en ce qu'il comporte les étapes de :

- Calculer une pluralité de niveaux critiques de roulage en fonction des capteurs de détection, de paramètres liés audit véhicule et d'un obstacle se trouvant dans l'environnement du véhicule ;
- Déterminer si un obstacle se trouve sur la trajectoire dudit véhicule ; et
- En fonction des niveaux critiques calculés et de la détermination d'un obstacle sur la trajectoire dudit véhicule, prendre une décision concernant le freinage du véhicule.

Les capteurs de détection sont de préférences des capteurs à ultrasons. Au moins un niveau critique tient compte de l'angle au volant du véhicule.

Cela apporte plus de précision et de fiabilité lors de manoeuvres à basse vitesse.

Comme on va le voir en détail par la suite, les différents niveaux critiques et le calcul d'un obstacle sur la trajectoire permettent de prendre une décision adéquate concernant le freinage du véhicule car ces paramètres donnent des informations précises sur la situation de roulage et sur la détection d'un obstacle dans l'environnement du véhicule.

Selon des modes de réalisation non limitatifs, le procédé présente en outre les caractéristiques suivantes.

- Un premier niveau critique de roulage est déterminé en fonction de l'activation des capteurs de détection. Cela permet de pondérer le niveau critique en fonction du nombre de capteurs qui ont détecté un obstacle (la situation est plus critique si plusieurs capteurs ont détecté un obstacle).
- Un deuxième niveau critique de roulage est déterminé en fonction d'une vitesse du véhicule. Cela permet de prendre en compte la vitesse du véhicule comme paramètre critique. Le niveau critique est plus important si la vitesse du véhicule est élevée.
- Un troisième niveau critique de roulage est déterminé en fonction d'une distance de l'obstacle calculée par rapport au véhicule. Cela permet de prendre en compte la distance de l'obstacle par rapport au véhicule comme paramètre critique. Le niveau critique est plus élevé si distance entre l'obstacle et la voiture est faible.
- Un quatrième niveau critique de roulage est déterminé en fonction de la vitesse relative de l'obstacle par rapport au véhicule. Cela permet de prendre en compte la vitesse relative de l'obstacle par rapport au véhicule comme paramètre critique. Le niveau critique est plus élevé si l'on se rapproche rapidement de l'obstacle.
- La distance de l'obstacle est calculée en fonction d'un angle au volant du véhicule. Cela apporte plus de précision et de fiabilité lors de manoeuvres a basse vitesse (l'accélération latérale et la vitesse de lacet sont peu représentatives en quasi statique).
- En fonction de l'angle au volant du véhicule, seules les distances mesurées par une partie des capteurs de détection sont considérées. On améliore ainsi une la robustesse au niveau de la surveillance.

- Les capteurs considérés sont ceux répartis globalement autour d'une direction correspondant à l'angle au volant. Par exemple, si l'angle au volant est à droite, l'ensemble des capteurs considérés sera à droite ; si l'angle au volant est à gauche, l'ensemble des capteurs considérés sera à gauche ; si l'angle est nul l'ensemble des capteurs sera au centre. Dans le dernier cas, on peut donc considérer tous les capteurs. On peut avoir ainsi plusieurs ensembles de capteurs associés à plusieurs intervalles d'angles au volant. Le nombre d'intervalles n'est pas limitatif.
- La distance de l'obstacle est calculée en utilisant la plus petite distance capteur parmi les distances capteurs envoyées par les capteurs de détection considérés. Ce calcul est plus simple.
- On détermine un marqueur critique à partir des niveaux critiques de roulage calculés égal à la moyenne des deux niveaux critiques de roulage les plus grands.
- L'étape de détermination d'un obstacle sur la trajectoire du véhicule comporte les sous-étapes de :

  ◦ Déterminer un niveau de confiance associé à un capteur de détection en fonction d'une distance renvoyée par les capteurs de détection ;
  ◦ Définir des zones statiques de détection et des probabilités de détection associées à chaque zone statique en fonction des niveaux de confiance déterminés ;
  ◦ Définir des zones dynamiques de détection ;
  ◦ Déterminer si un obstacle se situe sur la trajectoire du véhicule, en fonction desdites probabilités et desdites zones dynamiques définies.

Cela permet de mieux détecter les obstacles en fonction de ce que fait le conducteur avec le volant et donc d'éventuels changements de direction.

- Le procédé comporte en outre une étape supplémentaire de détecter si le véhicule comporte une remorque arrière. Cela permet de se passer d'un contact électrique de remorque. On doit savoir s'il y a une remorque pour ne pas détecter à tort un obstacle vers l'arrière alors que c'est une remorque, ce qui serait non pertinent.
- La décision concernant le freinage est une requête minimale de freinage des freins du véhicule pour accélérer un déclenchement du freinage s'il existe un obstacle sur la trajectoire du véhicule et si les différents niveaux de critique de roulage sont supérieurs à un seuil critique déterminé. Cela permet d'améliorer le temps de réaction du freinage.

Selon un deuxième objet de l'invention, elle concerne un dispositif de surveillance d'un environnement d'un véhicule apte à se déplacer selon une trajectoire, caractérisé en ce qu'il comporte une unité de contrôle pour :

- Calculer une pluralité de niveaux critiques de roulage en fonction de capteurs de détection, de paramètres liés audit véhicule et d'un obstacle se trouvant dans l'environnement du véhicule ;
- Déterminer si un obstacle se trouve sur la trajectoire dudit véhicule ; et
- En fonction des niveaux critiques calculés et de la détermination d'un obstacle sur la trajectoire dudit véhicule, prendre une décision concernant le freinage du véhicule.

Les capteurs de ce dispositif de surveillance sont, selon un mode de réalisation, des capteurs de détection à ultrasons. Lesdits paramètres comprennent l'angle au volant.

Selon un mode de réalisation non limitatif, l'unité de contrôle est en outre apte à :

- Déterminer un niveau de confiance associé à un capteur de détection en fonction d'une distance renvoyée par les capteurs de détection ;
- Définir des zones statiques de détection et des probabilités de détection associées à chaque zone statique en fonction des niveaux de confiance déterminés ;
- Définir des zones dynamiques de détection ; et
- Déterminer si un obstacle se situe sur la trajectoire du véhicule, en fonction desdites probabilités et desdites zones dynamiques.

Selon un mode de réalisation, le dispositif de surveillance selon l'invention met en oeuvre un procédé objet de la présente invention.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

D'autres caractéristiques et avantages de la présente invention seront mieux compris à l'aide de la description et des dessins non limitatifs parmi lesquels :

- la Fig. 1 représente un diagramme d'un premier mode de réalisation non limitatif du procédé de surveillance selon l'invention ;
- la Fig. 2 représente un schéma d'un véhicule comportant des capteurs de détection utilisés par le procédé de surveillance de la Fig. 1 ;
- la Fig. 3 représente un diagramme expliquant le calcul d'une distance d'un obstacle par rapport à un véhicule en fonction d'un angle au volant du véhicule, selon une étape du procédé de surveillance de la Fig. 1 ;
- la Fig. 4 représente un schéma d'un véhicule et de zones statiques de détection utilisées par le procédé de surveillance de la Fig. 1 ;
- la Fig. 5 représente un schéma d'un véhicule et de zones dynamiques de détection utilisées par le procédé de surveillance de la Fig. 1 ;
- la Fig. 6 illustre un mode de réalisation non limitatif d'un dispositif de mise en oeuvre du procédé de la Fig. 1 ; et
- la Fig. 7 représente un diagramme d'un deuxième mode de réalisation non limitatif du procédé de surveillance selon l'invention.

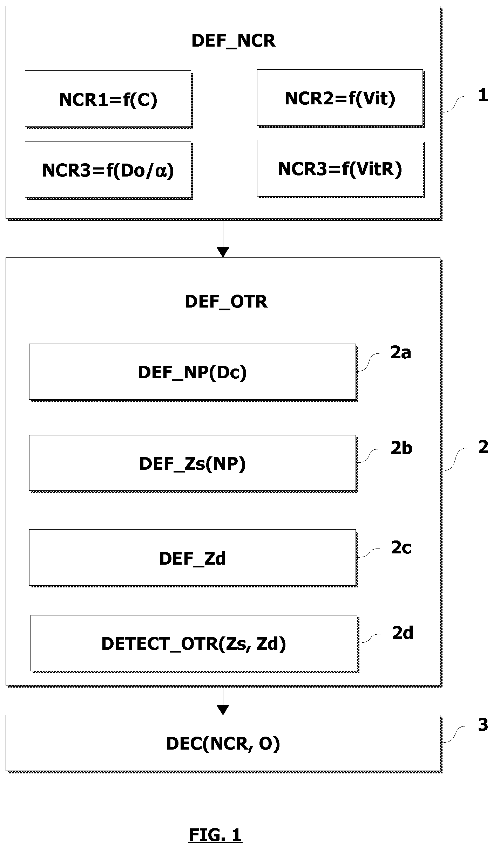

Le procédé de surveillance d'un environnement d'un véhicule apte à se déplacer selon une trajectoire, selon l'invention, est décrit dans un mode de réalisation non limitatif à la Fig. 1.

Par véhicule automobile, on entend tout véhicule comprenant un moteur.

Le procédé de surveillance comporte les étapes suivantes telles qu'illustrées à la Fig 1 :

- Calculer une pluralité de niveaux critiques NCR de roulage en fonction de capteurs de détection C, de paramètres liés audit véhicule V et d'un obstacle O se trouvant dans l'environnement du véhicule (étape DEF_NCR) ;
- Déterminer si un obstacle O se trouve sur la trajectoire TR dudit véhicule V (étape DEF_OTR) ; et
- En fonction des niveaux critiques calculés NCR et de la détermination d'un obstacle O sur la trajectoire TR dudit véhicule V, prendre une décision concernant le freinage du véhicule (étape DEC(NCR, O)).

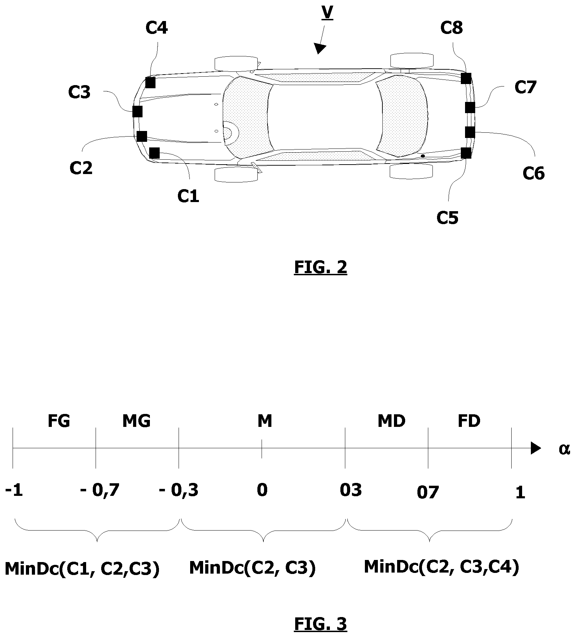

On notera que dans l'exemple pris pour la description, le véhicule comporte quatre capteurs de détection avant (deux centraux C2, C3 et deux latéraux C1, C4) et quatre capteurs de détection arrière (deux centraux C6, C7 et deux latéraux C5, C8) tels qu'illustrés sur la Fig. 2.

On notera que pour la suite de la description, on décrit l'exemple d'une surveillance dans l'environnement avant du véhicule. Mais bien entendu tout ce qui va être décrit ci-après s'applique de la même manière à l'environnement arrière du véhicule.

Les étapes du procédé sont décrites en détail ci-après.

**Dans une première étape 1)**, on calcule une pluralité de niveaux critiques NCR de roulage en fonction des capteurs de détection C, dudit véhicule V et d'un obstacle O se trouvant dans l'environnement du véhicule.

Dans un mode de réalisation non limitatif, un niveau critique de roulage NCR comporte une valeur variant entre 0 et 1.

Premier niveau critique NCR1

Dans un mode de réalisation non limitatif, un premier niveau critique de roulage NCR1 est déterminé en fonction de l'activation des capteurs de détection C. On notera que dans un mode de réalisation non limitatif, un capteur C est actif s'il renvoie une distance capteur Dc inférieure à une distance maximum de détection Dcmax pour un capteur, soit dans un exemple non limitatif 2 mètres pour Dcmax.

Le premier niveau critique NCR1 est déterminé de la manière suivante :

- Si les capteurs C2 OU C3 (ceux centrés sur l'avant du véhicule) sont actifs alors on multiplie le nombre de capteurs actifs par un gain égal à une première valeur VA1, dans un exemple non limitatif égal à 0,25.
- Sinon cela signifie que ce sont les capteurs C1 et C4 qui sont actifs. On multiplie alors on multiple le nombre de capteurs actifs par un gain égal à une deuxième valeur VA2, dans un exemple non limitatif égal à 0,125.

On notera que la première valeur VA1 est supérieure à la deuxième valeur VA2 car une détection effectuée par les capteurs centraux est plus critique qu'une détection effectuée par les capteurs latéraux.

Deuxième niveau critique NCR2

Dans un mode de réalisation non limitatif, un deuxième niveau critique de roulage NCR2 est déterminé en fonction d'une vitesse Vit du véhicule V.

Le deuxième niveau critique NCR2 est déterminé de la manière suivante :

- Si la vitesse véhicule Vit est égale à une valeur maximum VitMax, dans un exemple non limitatif de 10km/h, alors le niveau critique NCR2 est égal à 1.
- Sinon le niveau critique NCR2 est égal à 0 à zéro km/h et varie linéairement entre ces 2 valeurs.

Troisième niveau critique NCR3

Dans un mode de réalisation non limitatif, un troisième niveau critique de roulage NCR3 est déterminé en fonction d'une distance de l'obstacle Do calculée par rapport au véhicule V.

On estime que plus la distance de l'obstacle Do est grande, plus l'obstacle O est loin du véhicule et moins le troisième niveau critique de roulage NCR3 est critique.

Dans un mode de réalisation non limitatif, le troisième niveau de roulage NCR3 est égal à :

$$NCR3 = [(Do - Dcmax)/[(0,25-Dcmax)],$$

avec Dcmax = 2 mètres comme vu précédemment.

Dans un mode de réalisation non limitatif, la distance de l'obstacle Do est calculée en fonction d'un angle au volant $\alpha$ du véhicule. Les capteurs sont ainsi pondérés en fonction de la volonté du conducteur d'aller a gauche ou a droite. Cela apporte une meilleure robustesse au niveau de la surveillance. Le calcul s'effectue de la manière suivante dans un mode de réalisation non limitatif.

On détermine cinq états différents pour l'angle au volant qui sont les suivants tels qu'illustrés sur la Fig. 3 :

- $\alpha$ = FG, ce qui signifie que le volant est dans un intervalle entre à fond à gauche (c'est-à-dire en butée à gauche) et une valeur un peu plus faible ;
- $\alpha$ = MG, ce qui signifie que le volant se situe au milieu à gauche ;
- $\alpha$ = M, ce qui signifie que le volant se situe au milieu (c'est-à-dire droit) ;
- $\alpha$ = MD, ce qui signifie que le volant se situe au milieu à droite ; et
- $\alpha$ = FD, ce qui signifie que le volant est dans un intervalle entre à fond à droite (c'est-à-dire en butée à droite) et une valeur un peu plus faible ;

On notera que dans un mode de réalisation non limitatif, on peut normaliser l'angle au volant $\alpha$ en le divisant par la valeur maximale (dans un exemple non limitatif: 540°) afin d'avoir des valeurs comprises entre - 1 et 1 pour ledit angle au volant telles qu'illustrées sur la Fig. 3.

En fonction de l'état de l'angle au volant, on prend le minimum des distances capteurs Dc renvoyées par un certain nombre de capteurs de détection tel qu'illustré sur la Fig. 3.

Ainsi, lorsque $\alpha$ = FG, on ne prend que les distances capteurs Dc des capteurs C1, C2 et C3. On estime que le capteur le plus à droite C4 n'est pas à prendre en compte.

On détermine ainsi la distance de l'obstacle O par rapport au véhicule V comme étant :

$$Do = MinDc(C1, C2, C3).$$

De la même manière, pour $\alpha$ = MG, Do= MinDc(C1, C2, C3). On estime que le capteur le plus à droite C4 n'est pas à prendre en compte.

De la même manière, pour $\alpha$ = M, Do= MinDc(C2, C3). On estime que les capteurs le plus à gauche C1 et le plus à droite C4 ne sont pas à prendre en compte.

De la même manière, pour $\alpha$ = MD, Do= MinDc(C2, C3, C4). On estime que le capteur le plus à gauche C1 n'est pas à prendre en compte.

De la même manière, pour $\alpha$ = FD, Do= MinDc(C2, C3, C4). On estime que le capteur le plus à gauche C1 n'est pas à prendre en compte.

Quatrième niveau critique NCR4

Dans un mode de réalisation non limitatif, un quatrième niveau critique de roulage NCR4 est déterminé en fonction de la vitesse relative de l'obstacle VitR par rapport au véhicule.

On rappelle que la vitesse relative VitR est négative lorsque le véhicule V se rapproche de l'obstacle O. On notera que la vitesse relative est calculée à partir des distances données par les capteurs à ultrasons.

Le quatrième niveau critique NCR4 est égal à la vitesse relative VitR multipliée par un gain égale à -1,3. Cette valeur est prédéterminée afin de donner un niveau critique élevé dans le cas où l'obstacle se rapproche de la voiture de façon significative.

Dans un mode de réalisation non limitatif, après avoir calculé ces quatre niveaux critiques NCR1 à NCR4, on en déduit un marqueur critique de roulage NCR_FLG à partir des niveaux critiques de roulage calculés. Dans un mode de réalisation non limitatif, le marqueur critique de roulage NCR_FLG est égal à la moyenne des deux niveaux critiques de roulage les plus grands parmi les quatre niveaux critiques calculés. Cela permet d'avoir une meilleure estimation de la décision de freinage à prendre : on considère qu'un seul niveau critique NCR n'est pas suffisant pour dire que la situation est critique (par exemple la voiture qui roule a 10 km/h donne un NCR2 = 1 (ou plus) mais s'il n'y a pas d'obstacle, la situation ne sera pas trop critique ; par contre si en plus de NCR2, on a des capteurs actifs par exemple NCR1 alors la situation devient plus critique).

**Dans une deuxième étape 2)**, on détermine si un obstacle O se trouve sur la trajectoire TR dudit véhicule V.

Dans un mode de réalisation non limitatif, l'étape de détermination d'un obstacle O sur la trajectoire TR du véhicule comporte les sous-étapes, telles qu'illustrées à la Fig. 1, de :

- Déterminer un niveau de confiance NP associé à un capteur de détection C en fonction d'une distance Dc renvoyée par les capteurs de détection (sous-étape DEF_NP(DC)) ;
- Définir des zones statiques de détection Zs et des probabilités de détection PZs associées à chaque zone statique Zs en fonction des niveaux de confiance déterminés NP (sous-étape DEF_Zs(NP)) ;
- Définir des zones dynamiques de détection Zd (sous-étape DEF_Zd) ;
- Déterminer si un obstacle O se situe sur la trajectoire TR du véhicule, en fonction desdites probabilités de détection Pzs et desdites zones dynamiques Zd (sous-étape DETECT_OTR(Zs, Zd)).

Les sous-étapes sont décrites en détail ci-après.

*Dans une première sous-étape 2a)*, on détermine un niveau de confiance NP associé à un capteur de détection C en fonction d'une distance Dc renvoyée par les capteurs de détection.

Un niveau de confiance NP est fonction d'une distance capteur renvoyée par un capteur C. On estime que plus la distance capteur Dc est petite, plus le niveau de confiance NP est élevé. On estime ainsi qu'un capteur C a détecté un obstacle réel et non pas du bruit, de l'écho ou un autre véhicule qui passe à côté du véhicule considéré.

Ainsi, dans des exemples non limitatifs, un niveau de confiance comprend:

- les valeurs suivantes pour un capteur C actif :

$NP = 0{,}95$, pour $Dc < 0{,}8m$.
$NP = 0{,}8$, pour $Dc > 1{,}5m$.
$Np = 0{,}90$ pour $Dc = 1\ m$
$Np = 0{,}85$ pour $Dc = 1.2\ m$

On notera que les valeurs comprises entre ces valeurs sont extrapolées linéairement.

On rappelle qu'un capteur C est actif s'il renvoie une distance capteur Dc inférieure à une distance maximum de détection Dcmax (2mètres dans l'exemple pris) pour un capteur.

- la valeur suivante pour un capteur non actif :

$$NP = 0{,}5.$$

Dans ce dernier cas, cela signifie par exemple qu'un obstacle n'est pas détecté bien qu'il soit présent.

*Dans une deuxième sous-étape 2b)*, on définit des zones statiques de détection Zs et des probabilités de détection PZs associées à chaque zone statique Zs en fonction des niveaux de confiance déterminés NP.

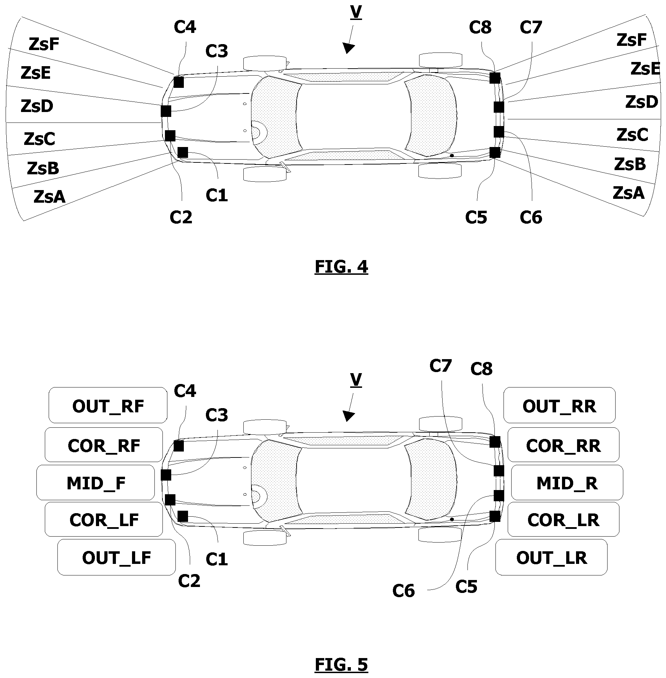

Dans un mode de réalisation non limitatif, pour les quatre capteurs avant C1 à C4, on définit six zones statiques ZsA à ZsF telles qu'illustrées sur la Fig. 4.

Pour chaque zone statique, on calcule une probabilité de détection PZs associée en utilisant la théorie des probabilités de Bayes connue de l'homme du métier.

A cet effet, à chaque zone statique Zs, est associée un ou plusieurs capteurs de détection C.

Ainsi, dans un exemple non limitatif :

- A la zone ZsA est associé le capteur C1 ;
- A la zone ZsB sont associés les capteurs C1 et C2 ;
- A la zone ZsC sont associés les capteurs C1, C2 et C3 ;
- A la zone ZsD sont associés les capteurs C2, C3 et C4 ;
- A la zone ZsE sont associés les capteurs C3 et C4 ;
- A la zone ZsF est associé le capteur C4.

Selon la formule de Bayes, on a en entrée les niveaux de confiance NP associés à chaque capteur calculés précédemment.

On a PZs = $\Pi_i$ NPci / [$\Pi_i$ NPci+ ($\Pi_i$ (1-NPci))], avec i allant de 1 à n, et n le nombre de capteur(s) C associé(s) à chaque zone statique Zs.

Ainsi, la probabilité PZs associée à une zone statique est égale à :

$$PZsA = NP_{C1}$$

$$PZsB = (NP_{C1} * NP_{C2}) / [(NP_{C1} * NP_{C2}) + ((1- NP_{C1}) *(1- NP_{C2}))]$$

$$PZsC = (NP_{C1} * NP_{C2} * NP_{C3}) / [(NP_{C1} * NP_{C2} * NP_{C3}) + ((1- NP_{C1}) * (1- NP_{C2}) * (1- NP_{C3}))]$$

$$PZsD = (NP_{C2} * NP_{C3} * NP_{C4}) / [(NP_{C2} * NP_{C3} * NP_{C4}) + ((1- NP_{C2}) * (1- NP_{C3}) * (1- NP_{C4}))]$$

$$PZsE = (NP_{C3} * NP_{C4}) / [(NP_{C3} * NP_{C4}) + ((1- NP_{C3}) *(1- NP_{C4}))]$$

$$PZsF = NP_{C4}$$

On obtient ainsi des probabilités Pzs associées à chaque zone statique dont les valeurs sont comprises entre 0 et 1.

*Dans une troisième sous-étape 2c)*, on définit des zones dynamiques de détection Zd.

Dans un mode de réalisation non limitatif, pour les quatre capteurs avant C1 à C4, on définit cinq zones dynamiques Zd telles qu'illustrées sur la Fig. 5.

Ces zones dynamiques Zd sont définies en fonction du déplacement du véhicule V et des capteurs de détection C.

Ces zones dynamiques correspondent au risque de collision en fonction de ce que va faire le véhicule s'il tourne a gauche ou a droite ou en ligne droite.

Ces zones sont nommées :

- première zone Zd1 = OUT_RF pour une zone dynamique la plus à droite du véhicule V ;
- deuxième zone Zd2 = COR_RF pour une zone dynamique à droite du véhicule V ;
- troisième zone Zd3 = MID_F pour une zone dynamique au milieu du véhicule V ;
- quatrième zone Zd4 = COR_LF pour une zone dynamique à gauche du véhicule V ; et
- cinquième zone Zd5 = OUT_LF pour une zone dynamique la plus à gauche du véhicule V.

*Dans une quatrième sous-étape 2d)*, on détermine si un obstacle O se situe sur la trajectoire TR du véhicule, en fonction desdites probabilités Pzs et desdites zones dynamiques Zd.

Dans un mode de réalisation non limitatif, on détermine si un obstacle O se situe sur la trajectoire TR du véhicule, également en fonction de l'angle au volant $\alpha$.

Ainsi, dans un mode de réalisation non limitatif, la détermination s'effectue de la manière suivante.

Dans une première phase, on définit dans quelle zone dynamique Zd se situe un obstacle O comme suit.

1) Un obstacle O se situe dans la quatrième zone Zd4 = COR_LF si :

$\alpha$ = FG & PZsA > S1 OU
$\alpha$ = M ou MG & PZsB > S2 OU
$\alpha$ = MD & PZsC > S3 OU
$\alpha$ = FD & PZsD > S4 OU
Dc2 < DS,

avec S1, un premier seuil de fiabilité (qui est une valeur paramétrable sur véhicule). Dans un exemple non limitatif, S1 = 0.95.
avec S2, un deuxième seuil de fiabilité (qui est une valeur paramétrable sur véhicule). Dans un exemple non limitatif, S2 = 0.95.
avec S3, un troisième seuil de fiabilité (qui est une valeur paramétrable sur véhicule). Dans un exemple non limitatif, S3 = 0.95.
avec S4, un quatrième seuil de fiabilité (qui est une valeur paramétrable sur véhicule). Dans un exemple non limitatif, S4 = 0.95.
avec Dc2 la distance capteur renvoyée par le capteur C2.
Et avec DS un seuil de distance représentant une situation où l'obstacle O est très proche du véhicule V. Dans un exemple non limitatif, DS = 0,8m.

2) Un obstacle O se situe dans la deuxième zone Zd2 = COR_RF si :

$\alpha$ = FD & PZsF > S1 OU

$\alpha$ = M ou MG & PZsE > S2 OU

$\alpha$ = MD & PZsD > S3 OU

$\alpha$ = FG & PZsC > S4 OU

Dc3 < DS

avec Dc3 la distance capteur renvoyée par le capteur C3.

On notera qu'on utilise ici les mêmes seuils de fiabilité S1 à S4 que précédemment car ils sont symétriques gauche/droite.
3) Un obstacle O se situe dans la troisième zone Zd3 = MID_F si :

$\alpha$ = FG & PZsA > S1' OU

$\alpha$ = MG & PZsB > S2' OU

$\alpha$ = MD & PZsE > S2'

$\alpha$ = FD & PZsF > S1'

$\alpha$ = M & (PZsC > S3' || PZsD > S3')

Dc2 < DS ET Dc3 < DS,

avec S1', S2', et S3' d'autres seuils de fiabilité qui ont pour valeurs :

S1' = 0.8 ; S2' = 0.9 ; S3' = 0.95 dans des exemples non limitatifs.

Dans une deuxième phase, on regarde le résultat des calculs effectués ci-dessus.

- Si un obstacle O se situe dans la quatrième zone dynamique COR_LF ou dans la deuxième zone dynamique COR_RF, cela signifie qu'il existe un obstacle O dans un coin gauche ou droite du véhicule V. Dans ce cas, on positionne un marqueur de coin COR_FLG à un. Sinon, le marqueur est positionné à zéro ;
- Si un obstacle O se situe dans la troisième zone dynamique MID_F, cela signifie qu'il existe un obstacle O au milieu de la trajectoire du véhicule V. Dans ce cas, on positionne un marqueur de milieu MID_FLG à un. Sinon, le marqueur est positionné à zéro ;
- Ainsi, Si l'un des deux marqueurs ci-dessus COR_FLG ou MID_FLG est positionné à un, cela signifie qu'il existe un obstacle O sur la trajectoire TR du véhicule V. On positionne un marqueur de trajectoire INTR_FLG1 à un ;
- Sinon, cela signifie qu'il n'en existe aucun. Dans ce cas, dans un mode de réalisation non limitatif, on détermine si un obstacle pourrait se situer sur la trajectoire TR du véhicule V de la manière suivante. Si PzsB, PzsC, PzsD ou PzsE > S7, S7 étant un seuil de fiabilité égal à 0.9, dans un exemple non limitatif, alors on en déduit qu'il existe probablement un obstacle O sur la trajectoire du véhicule V. Dans ce cas, il n'y a pas d'obstacle sur la trajectoire, mais un obstacle probable c'est-à-dire avec un niveau de confiance plus faible que lors du calcul de l'obstacle sur la trajectoire (les critères sont donc moins contraignants).

On positionne un marqueur probable de trajectoire INTR_FLG2 à un.

- Sinon, si PzsA ou PzsF > S8, S8 étant un seuil de fiabilité égal à 0.85 dans un exemple non limitatif, alors cela signifie qu'il existe un obstacle O devant le véhicule V mais qu'il se situe en dehors de la trajectoire TR dudit véhicule V.
- Sinon, cela veut dire qu'il n'existe aucun obstacle O devant le véhicule V.

**Dans une troisième étape 3)**, en fonction des niveaux critiques de roulage calculés NCR et de la détermination d'un obstacle O sur la trajectoire TR dudit véhicule, on prend une décision concernant le freinage du véhicule.

Ainsi,

a) S'il existe un obstacle O sur la trajectoire TR du véhicule (marqueur de trajectoire INTR_FLG positionné à un), et
b) Si le marqueur critique de roulage NCR_FLG (calculé précédemment lors de la première étape) est supérieur à un seuil critique NCR_S (dans un exemple non limitatif de 0,8), alors on en déduit que l'obstacle O est critique pour le véhicule V. Dans ce cas, la décision concernant le freinage est une décision d'enclencher un freinage automatique. Dans un mode de réalisation non limitatif, la réduction automatique de la vitesse du véhicule automobile V s'effectue par un freinage autonome. Le freinage autonome évite à un conducteur du véhicule automobile V de devoir freiner lui-même avec une pédale de frein.

Dans des exemples de réalisation non limitatifs, le freinage peut être hydraulique, électro-hydraulique ou encore électrique.

Dans un mode de réalisation non limitatif, la décision concernant le freinage est une requête minimale de freinage des freins du véhicule pour accélérer un déclenchement du freinage s'il existe un obstacle O sur la trajectoire du véhicule et si les différents niveaux de critique de roulage sont supérieurs à un seuil critique déterminé NCR_S.

Ainsi, si les deux conditions précédentes a) et b) sont réunies lorsque le seuil critique NCR_S a une valeur de 0,7 OU qu'il existe probablement un obstacle sur la trajectoire TR du véhicule V (marqueur probable de trajectoire INTR_FLG2 à un), alors on lance cette requête minimale RQ.

La requête minimale de freinage RQ est envoyée au moyen d'une commande de freinage envoyée par une unité de contrôle UC.

Dans le cas d'un freinage hydraulique ou électro-hydraulique, la commande de freinage est envoyée à une pompe ABS située dans un modulateur ESC en anglais « Electronic Stability Control » afin de réduire le temps de réponse hydraulique des freins, en remplissant les étriers de freins avec du liquide de frein de façon anticipée, ce qui instaure une pression hydraulique dans les freins qui sont alors « pré-chargés ». La pompe ABS permet de générer/enlever de la pression dans les freins du véhicule automobile V en coopérant avec un modulateur hydraulique compris dans le modulateur ESC, ce qui entraîne un rapprochement des étriers de frein du disque de frein.

Le fonctionnement d'un modulateur ESC étant connu de l'homme du métier, il ne sera pas décrit ici.

Cette fonction de pré-remplissage de pression des freins du véhicule automobile V est couramment appelée en anglais « Brake Pre-fill ». Dans un exemple de réalisation non limitatif, cette requête minimale de freinage RQ permet d'augmenter la pression des freins de un ou deux bars.

Dans le cas d'un freinage électrique, la commande de freinage est envoyée à un moteur électrique de frein MB pour rapprocher les étriers de frein du disque de frein.

Ainsi, le procédé décrit permet d'enclencher un freinage automatique basé sur des paramètres précis (obstacle O sur trajectoire du véhicule, angle au volant, zones de détection statiques et dynamiques).

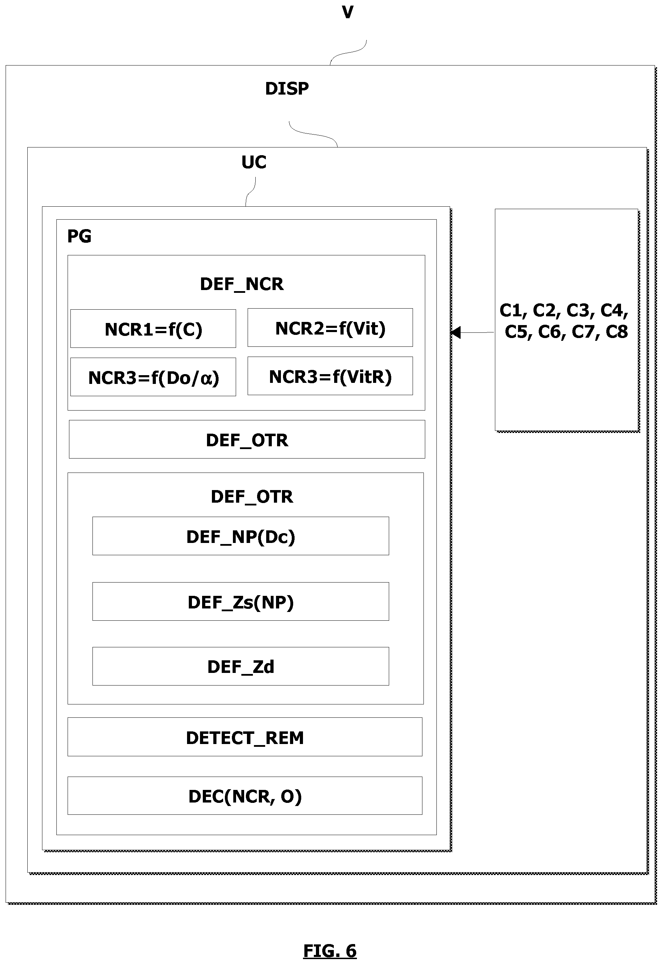

Le procédé de l'invention est mis en oeuvre par un dispositif DISP de surveillance d'un environnement d'un véhicule apte à se déplacer selon une trajectoire, représenté à la Fig. 6.

Ce dispositif DISP est intégré dans le véhicule V.

Ce dispositif DISP comporte notamment une unité de contrôle UC pour :

- Calculer une pluralité de niveaux critiques de roulage NCR en fonction de capteurs de détection C, de paramètres liés audit véhicule V et d'un obstacle O se trouvant dans l'environnement du véhicule V ;
- Déterminer si un obstacle O se trouve sur la trajectoire TR dudit véhicule V ; et
- En fonction des niveaux critiques de roulage calculés NCR et de la détermination d'un obstacle O sur la trajectoire TR dudit véhicule, prendre une décision concernant le freinage du véhicule V.

Dans un mode de réalisation non limitatif, l'unité de contrôle UC est en outre apte à :

- Déterminer un niveau de confiance NP associé à un capteur de détection en fonction d'une distance Dc renvoyée par les capteurs de détection C ;
- Définir des zones statiques de détection Zs et des probabilités de détection PZs associées à chaque zone statique en fonction des niveaux de confiance déterminés NP ;
- Définir des zones dynamiques de détection Zd ; et
- Déterminer si un obstacle O se situe sur la trajectoire TR du véhicule V, en fonction desdites probabilités PZs et desdites zones dynamiques Zd.

Dans un mode de réalisation non limitatif, le dispositif de détection DISP peut en outre comporter les capteurs de détection C1 à C8.

Dans cette application, les capteurs de détection C sont des capteurs à ultrasons. L'avantage de tels capteurs est leur large cône de détection, leur faible coût et leur omniprésence dans le domaine automobile. On notera que ces capteurs ont en général une portée de 2 mètres environ contrairement à des capteurs de détection tels que des lidars ou radars qui ont une portée plus grande.

On notera que la mise en oeuvre du procédé de surveillance exposé ci-dessus peut être effectuée au moyen d'un dispositif micro programmé « software », d'une logique câblée et/ou de composants électroniques « hardware ».

Ainsi, le dispositif de surveillance DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 6, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

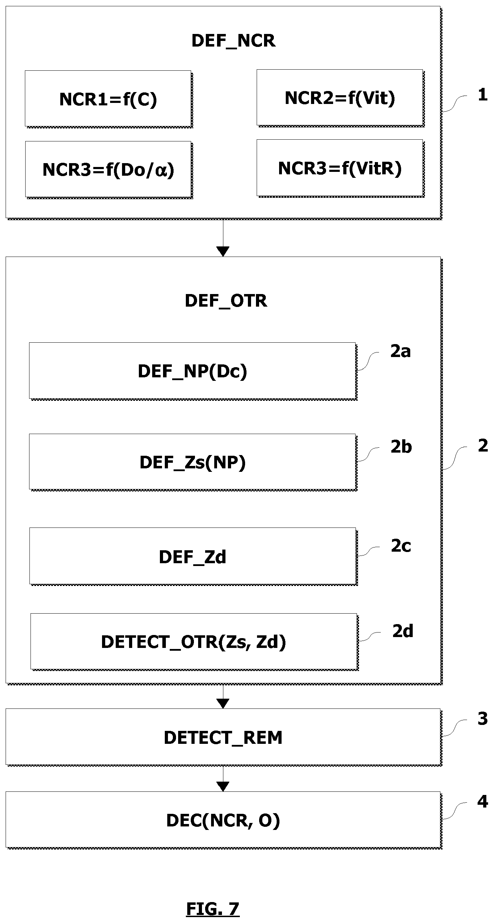

Ainsi, dans un mode de réalisation non limitatif, le procédé de surveillance peut comporter en outre une étape supplémentaire de détecter si le véhicule comporte une remorque arrière REM (étape DETECT_REM telle qu'illustrée sur la Fig. 7).

On notera que nous sommes dans le cas de la surveillance de l'environnement arrière du véhicule V.

Cette étape supplémentaire est effectuée avant la décision à prendre sur le freinage (tel qu'illustré sur la Fig. 7).

Cette étape supplémentaire est déclenchée selon deux conditions :

- d'une part si le véhicule V est en mouvement ;
- d'autre part si les capteurs arrière centraux C6 et C7 sont actifs.

Si les deux conditions sont remplies, la détection d'une remorque arrière REM s'effectue comme suit.

On calcule pour chaque capteur arrière central C6 et C7 la différence DIFF entre la vitesse du véhicule et la vitesse relative VitR de l'obstacle O, ici un obstacle O arrière, par rapport au véhicule, cette dernière étant calculée à partir de la distance capteur Dc fournie par le capteur en dérivant la distance. Si cette différence DIFF est égale à zéro, cela signifie que l'obstacle O est stationnaire par rapport au sol. Si la valeur absolue de la vitesse relative VitR est nulle et si l'obstacle O n'est pas stationnaire, alors on en déduit que l'obstacle O est une remorque REM. On positionne alors un marqueur de remorque FLG_REM à un.

On notera que si on a la différence calculée DIFF égale à zéro et la vitesse relative VitR est proche de zéro, cela signifie que le véhicule et l'obstacle O sont tous deux arrêtés.

Ainsi, si une remorque REM est détectée (FLG_REM = 1) on ne pourra pas engager de freinage automatique en marche arrière. La prise de décision DEC(NCR, O) est que aucun freinage automatique n'est effectué.

Ainsi, l'invention présente notamment les avantages suivants :

- Elle est simple à mettre en oeuvre et s'applique à tous systèmes de freinage y compris électriques ;
- Elle permet d'utiliser des capteurs à ultrasons, couramment utilisés lors de freinage en stationnement, et ce pour des vitesses plus élevées que dans les cas de stationnement ;
- Elle permet d'accélérer le temps de réaction du freinage grâce à l'envoi de la requête minimale de freinage ; et
- Elle permet de faire du freinage autonome avec des capteurs à ultrasons.

## Revendications

1. Procédé de surveillance d'un environnement d'un véhicule (V) apte à se déplacer selon une trajectoire (TR), **caractérisé en ce qu'**il comporte les étapes de :

   - Calculer une pluralité de niveaux critiques de roulage (NCR) en fonction de capteurs de détection (C) à ultrasons, de paramètres liés audit véhicule (V) et d'un obstacle (O) se trouvant dans l'environnement du véhicule (V) ;
   - Déterminer si un obstacle (O) se trouve sur la trajectoire (TR) dudit véhicule (V) ; et
   - En fonction des niveaux critiques de roulage calculés (NCR),

   prendre une décision concernant le freinage du véhicule (V), **caractérisé en ce qu'**au moins un des niveaux critiques tient compte de l'angle au volant ($\alpha$), et de la détermination d'un obstacle (O) sur la trajectoire (TR) dudit véhicule (V),; et selon lequel :

   - un niveau critique de roulage (NCR1) est déterminé en fonction de l'activation des capteurs de détection (C), permettant ainsi de pondérer le niveau critique en fonction du nombre de capteurs qui ont détecté un obstacle,
   - un niveau critique de roulage (NCR3) est déterminé en fonction d'une distance (Do) de l'obstacle calculée par rapport au véhicule, la distance (Do) de l'obstacle étant calculée en fonction d'un angle au volant ($\alpha$) du véhicule, et **en ce qu'**en fonction de l'angle au volant ($\alpha$) du véhicule, seules les distances capteurs (Dc) mesurées par une partie des capteurs de détection (C) sont considérées, les capteurs considérés étant ceux répartis globalement autour d'une direction correspondant à l'angle au volant.

2. Procédé de détection selon la revendication précédente, selon lequel un niveau critique de roulage (NCR2) est déterminé en fonction d'une vitesse (Vit) du véhicule.

3. Procédé de détection selon l'une des revendications précédentes, dans lequel la distance (Do) de l'obstacle est calculée en utilisant la plus petite distance capteur (Dc) parmi les distances capteurs (Dc) envoyées par les capteurs de détection considérés.

4. Procédé de détection selon l'une des revendications précédentes, selon lequel un niveau critique de roulage (NCR4) est déterminé en fonction de la vitesse relative (VitR) de l'obstacle par rapport au véhicule.

5. Procédé de détection selon l'une des revendications précédentes, selon lequel on détermine un marqueur critique (NCR_FLG) à partir des niveaux critiques de roulage calculés (NCR) égal à la moyenne des deux niveaux critiques de roulage les plus grands.

6. Procédé de détection selon l'une des revendications précédentes, selon lequel l'étape de détermination d'un obstacle (O) sur la trajectoire (TR) du véhicule (V) comporte les sous-étapes de :

   - Déterminer un niveau de confiance (NP) associé à un capteur de détection (C) en fonction d'une distance (Dc) renvoyée par les capteurs de détection ;
   - Définir des zones statiques de détection (Zs) et des probabilités de détection (PZs) associées à chaque zone statique en fonction des niveaux de confiance déterminés (NP), à chaque zone statique (Zs), étant associé(s) un ou plusieurs capteurs de détection (C) ;
   - Définir des zones dynamiques de détection (Zd), ces zones dynamiques (Zd) étant définies en fonction du déplacement du véhicule (V) et des capteurs de détection (C), lesdites zones dynamiques de détection (Zd) correspondant au risque de collision dans la direction de déplacement du véhicule ; et
- Déterminer si un obstacle (O) se situe sur la trajectoire (TR) du véhicule (V), en fonction desdites probabilités (PZs) et desdites zones dynamiques (Zd).

7. Procédé de détection selon l'une des revendications précédentes, selon lequel il comporte en outre une étape supplémentaire de détecter si le véhicule comporte une remorque arrière (REM).

8. Procédé de détection selon l'une des revendications précédentes, selon lequel la décision concernant le freinage est une requête minimale de freinage (RQ) des freins du véhicule pour accélérer un déclenchement du freinage s'il existe un obstacle (O) sur la trajectoire (TR) du véhicule et si les différents niveaux de critique de roulage (NCR) sont supérieurs à un seuil critique déterminé (NCR_S).

9. Dispositif (DISP) de surveillance d'un environnement d'un véhicule (V) apte à se déplacer selon une trajectoire (TR), comportant une unité de contrôle (UC) pour :

  - Calculer une pluralité de niveaux critiques de roulage (NCR) en fonction de capteurs de détection (C) à ultrasons, de paramètres liés audit véhicule (V) et d'un obstacle (O) se trouvant dans l'environnement du véhicule, lesdits paramètres comprenant de l'angle au volant ($\alpha$) dudit véhicule ;
  - Déterminer si un obstacle (O) se trouve sur la trajectoire (TR) dudit véhicule (V) ; et
  - En fonction des niveaux critiques de roulage calculés (NCR) et de la détermination d'un obstacle (O) sur la trajectoire (TR) dudit véhicule (V), prendre une décision concernant le freinage du véhicule ;

  **caractérisé en ce que** le dispositif de surveillance met en oeuvre un procédé selon l'une des revendications précédentes.

10. Dispositif (DISP) de surveillance selon la revendication précédente, selon laquelle l'unité de contrôle (UC) est en outre apte à :

  - Déterminer un niveau de confiance (NP) associé à un capteur de détection (C) en fonction d'une distance (Dc) renvoyée par les capteurs de détection (C) ;
  - Définir des zones statiques de détection (Zs) et des probabilités de détection (PZs) associées à chaque zone statique en fonction des niveaux de confiance déterminés (NP), à chaque zone statique (Zs), étant associé(s) un ou plusieurs capteurs de détection (C) ;
  - Définir des zones dynamiques de détection (Zd), ces zones dynamiques (Zd) étant définies en fonction du déplacement du véhicule (V) et des capteurs de détection (C) ; et
  - Déterminer si un obstacle (O) se situe sur la trajectoire (TR) du véhicule (V), en fonction desdites probabilités (PZs) et desdites zones dynamiques (Zd).

11. Produit programme (PG) d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 8.

**Patentansprüche**

1. Verfahren zur Überwachung der Umgebung eines Fahrzeugs (V), das sich gemäß einer Fahrspur (TR) bewegen kann, **dadurch gekennzeichnet, dass** es die folgenden Schritte aufweist:

  - Berechnen einer Vielzahl von kritischen Fahrbereichen (NCR) abhängig von Ultraschall-Erfassungssensoren (C), von mit dem Fahrzeug (V) verbundenen Parametern und von einem Hindernis (0), das sich in der Umgebung des Fahrzeugs (V) befindet;
  - Bestimmen, ob ein Hindernis (0) sich in der Fahrspur (TR) des Fahrzeugs (V) befindet; und
  - Entscheiden über das Bremsen des Fahrzeugs (V) abhängig von den berechneten kritischen Fahrbereichen (NCR),

  **dadurch gekennzeichnet, dass** mindestens einer der kritischen Bereiche den Lenkradwinkel ($\alpha$) und die Bestimmung eines Hindernisses (0) in der Fahrspur (TR) des Fahrzeugs (V) berücksichtigt; und gemäß dem:

- ein kritischer Fahrbereich (NCR1) abhängig von der Aktivierung der Erfassungssensoren (C) bestimmt wird, wodurch es möglich wird, den kritischen Bereich abhängig von der Anzahl von Sensoren zu gewichten, die ein Hindernis erfasst haben,

- ein kritischer Fahrbereich (NCR3) abhängig von einer bezüglich des Fahrzeugs berechneten Entfernung (Do) des Hindernisses bestimmt wird, wobei die Entfernung (Do) des Hindernisses abhängig von einem Lenkradwinkel (α) des Fahrzeugs berechnet wird,

und dass abhängig vom Lenkradwinkel (α) des Fahrzeugs nur die von einem Teil der Erfassungssensoren (C) gemessenen Sensorentfernungen (Dc) in Betracht gezogen werden, wobei die in Betracht gezogenen Sensoren diejenigen sind, die global um eine dem Lenkradwinkel entsprechende Richtung herum verteilt sind.

2. Erfassungsverfahren nach dem vorhergehenden Anspruch, wobei ein kritischer Fahrbereich (NCR2) abhängig von einer Geschwindigkeit (Vit) du Fahrzeugs bestimmt wird.

3. Erfassungsverfahren nach einem der vorhergehenden Ansprüche, wobei die Entfernung (Do) des Hindernisses unter Verwendung der geringsten Sensorentfernung (Dc) unter den von den in Betracht gezogenen Erfassungssensoren gesendeten Sensorentfernungen (Dc) berechnet wird.

4. Erfassungsverfahren nach einem der vorhergehenden Ansprüche, wobei ein kritischer Fahrbereich (NCR4) abhängig von der relativen Geschwindigkeit (VitR) des Hindernisses bezüglich des Fahrzeugs bestimmt wird.

5. Erfassungsverfahren nach einem der vorhergehenden Ansprüche, wobei eine kritische Markierung (NCR_FLG) ausgehend von den berechneten kritischen Fahrbereichen (NCR) gleich dem Mittelwert der zwei größten kritischen Fahrbereiche bestimmt wird.

6. Erfassungsverfahren nach einem der vorhergehenden Ansprüche, wobei der Schritt der Bestimmung eines Hindernisses (0) in der Fahrspur (TR) des Fahrzeugs (V) folgende Teilschritte aufweist:

- Bestimmen eines einem Erfassungssensor (C) zugeordneten Vertrauensbereichs (NP) abhängig von einer von den Erfassungssensoren zurückgeschickten Entfernung (Dc);
- Definieren statischer Erfassungszonen (Zs) und jeder statischen Zone zugeordneter Erfassungswahrscheinlichkeiten (PZs) abhängig von den bestimmten Vertrauensbereichen (NP), wobei jeder statischen Zone (Zs) einer oder mehrere Erfassungssensoren (C) zugeordnet ist/sind;
- Definieren dynamischer Erfassungszonen (Zd), wobei diese dynamischen Zonen (Zd) abhängig von der Bewegung des Fahrzeugs (V) und der Erfassungssensoren (C) definiert werden, wobei die dynamischen Erfassungszonen der Kollisionsgefahr in der Bewegungsrichtung des Fahrzeugs entsprechen; und
- abhängig von den Wahrscheinlichkeiten (PZs) und den dynamischen Zonen (Zd) Bestimmen, ob ein Hindernis (0) sich in der Fahrspur (TR) des Fahrzeugs (V) befindet.

7. Erfassungsverfahren nach einem der vorhergehenden Ansprüche, wobei es außerdem einen zusätzlichen Schritt der Erfassung aufweist, ob das Fahrzeug einen hinteren Anhänger (REM) aufweist.

8. Erfassungsverfahren nach einem der vorhergehenden Ansprüche, wobei die Entscheidung betreffend das Bremsen eine minimale Bremsanforderung (RQ) der Bremsen des Fahrzeugs ist, um ein Auslösen des Bremsens zu beschleunigen, falls es ein Hindernis (0) in der Fahrspur (TR) des Fahrzeugs gibt und falls die verschiedenen kritischen Fahrbereiche (NCR) größer als eine bestimmte kritische Schwelle (NCR_S) sind.

9. Überwachungsvorrichtung (DISP) einer Umgebung eines Fahrzeugs (V), das sich in einer Fahrspur (TR) bewegen kann, die eine Kontrolleinheit (UC) aufweist, um:

- eine Vielzahl kritischer Fahrbereiche (NCR) abhängig von Ultraschall-Erfassungssensoren (C), von mit dem Fahrzeug (V) verbundenen Parametern und von einem sich in der Umgebung des Fahrzeug befindenden Hindernis (0) zu berechnen, wobei die Parameter den Lenkradwinkel (α) des Fahrzeugs enthalten;
- zu bestimmen, ob ein Hindernis (0) sich in der Fahrspur (TR) des Fahrzeugs (V) befindet; und
- abhängig von den berechneten kritischen Fahrbereichen (NCR) und von der Bestimmung eines Hindernisses (0) in der Fahrspur (TR) des Fahrzeugs (V) eine Entscheidung bezüglich des Bremsens des Fahrzeugs zu treffen;

**dadurch gekennzeichnet, dass** die Überwachungsvorrichtung ein Verfahren nach einem der vorhergehenden Ansprüche anwendet.

10. Überwachungsvorrichtung (DISP) nach dem vorhergehenden Anspruch, wobei die Kontrolleinheit (UC) außerdem fähig ist:

- einen einem Erfassungssensor (C) zugeordneten Vertrauensbereich (NP) abhängig von einer von den Erfassungssensoren (C) zurückgeschickten Entfernung (Dc) zu bestimmen;
- statische Erfassungszonen (Zs) und jeder statischen Zone zugeordnete Erfassungswahrscheinlichkeiten (PZs) abhängig von den bestimmten Vertrauensbereichen (NP) zu definieren, wobei jeder statischen Zone (Zs) einer oder mehrere Erfassungssensoren (C) zugeordnet ist/sind;
- dynamische Erfassungszonen (Zd) zu definieren, wobei diese dynamischen Zonen (Zd) abhängig von der Bewegung des Fahrzeugs (V) und der Erfassungssensoren (C) definiert werden; und
- abhängig von den Wahrscheinlichkeiten (PZs) und von den dynamischen Zonen (Zd) zu bestimmen, ob ein Hindernis (0) sich in der Fahrspur (TR) des Fahrzeugs (V) befindet.

11. Computerprogrammprodukt (PG), das eine oder mehrere Anweisungsfolgen aufweist, die von einer Informationsverarbeitungseinheit ausführbar sind, wobei die Ausführung der Anweisungsfolgen eine Anwendung des Verfahrens nach einem der vorhergehenden Ansprüche 1 bis 8 ermöglicht.

**Claims**

1. Method for monitoring an environment of a vehicle (V) capable of moving along a trajectory (TR), **characterized in that** it comprises the steps of:

- computing a plurality of critical running levels (NCR) as a function of ultrasound detection sensors (C), of parameters linked to said vehicle (V) and of an obstacle (0) located in the environment of the vehicle (V);
- determining whether an obstacle (0) is located on the trajectory (TR) of said vehicle (V); and
- as a function of the computed critical running levels (NCR), taking a decision concerning the braking of the vehicle (V),

**characterized in that** at least one of the critical levels takes account of the steering wheel angle ($\alpha$), and of the determination of an obstacle (0) on the trajectory (TR) of said vehicle (V); and according to which:

- a critical running level (NCR1) is determined as a function of the activation of the detection sensors (C), thus making it possible to weight the critical level as a function of the number of sensors which have detected an obstacle,
- a critical running level (NCR3) is determined as a function of a distance (Do) from the obstacle computed in relation to the vehicle, the distance (Do) from the obstacle being computed as a function of a steering wheel angle ($\alpha$) of the vehicle, and **in that**, as a function of the steering wheel angle ($\alpha$) of the vehicle, only the sensor distances (Dc) measured by some of the detection sensors (C) are considered, the sensors considered being those distributed globally around a direction corresponding to the steering wheel angle.

2. Detection method according to the preceding claim, according to which a critical running level (NCR2) is determined as a function of a speed (Vit) of the vehicle.

3. Detection method according to one of the preceding claims, in which the distance (Do) from the obstacle is computed by using the smallest sensor distance (Dc) out of the sensor distances (Dc) sent by the detection sensors concerned.

4. Detection method according to one of the preceding claims, according to which a critical running level (NCR4) is determined as a function of the relative speed (VitR) of the obstacle in relation to the vehicle.

5. Detection method according to one of the preceding claims, according to which a critical marker (NCR_FLG) is determined from the computed critical running levels (NCR) equal to the average of the two greatest critical running levels.

6. Detection method according to one of the preceding claims, according to which the step of determination of an obstacle (0) on the trajectory (TR) of the vehicle (V) comprises the sub-steps of:

- determining a confidence level (NP) associated with a detection sensor (C) as a function of a distance (Dc) returned by the detection sensors;
- defining static detection zones (Zs) and detection probabilities (PZs) associated with each static zone as a function of the determined confidence levels (NP), there being one or more detection sensors (C) associated with each static zone (Zs);
- defining dynamic detection zones (Zd), these dynamic zones (Zd) being defined as a function of the movement of the vehicle (V) and of the detection sensors (C), said dynamic detection zones (Zd) corresponding to the risk of collision in the direction of movement of the vehicle; and
- determining whether an obstacle (0) is situated on the trajectory (TR) of the vehicle (V), as a function of said probabilities (PZs) and of said dynamic zones (Zd).

7. Detection method according to one of the preceding claims, according to which it further comprises an additional step of detecting whether the vehicle comprises a rear trailer (REM).

8. Detection method according to one of the preceding claims, according to which the decision concerning the braking is a minimum request for braking (RQ) of the brakes of the vehicle to speed up a triggering of the braking if there is an obstacle (0) on the trajectory (TR) of the vehicle and if the different critical running levels (NCR) are above a determined critical threshold (NCR_S).

9. Device (DISP) for monitoring an environment of a vehicle (V) capable of moving along a trajectory (TR), comprising a control unit (UC) for:

- computing a plurality of critical running levels (NCR) as a function of ultrasound detection sensors (C), of parameters linked to said vehicle (V) and of an obstacle (0) located in the environment of the vehicle, said parameters comprising the steering wheel angle ($\alpha$) of said vehicle;
- determining whether an obstacle (0) is located on the trajectory (TR) of said vehicle (V); and
- as a function of the computed critical running levels (NCR) and of the determination of an obstacle (0) on the trajectory (TR) of said vehicle (V), taking a decision concerning the braking of the vehicle;

**characterized in that** the monitoring device implements a method according to one of the preceding claims.

10. Monitoring device (DISP) according to the preceding claim, according to which the control unit (UC) is further capable of:

- determining a confidence level (NP) associated with a detection sensor (C) as a function of a distance (Dc) returned by the detection sensors (C) ;
- defining static detection zones (Zs) and detection probabilities (PZs) associated with each static zone as a function of the determined confidence levels (NP), one or more detection sensors (C) being associated with each static zone (Zs);
- defining dynamic detection zones (Zd), these dynamic zones (Zd) being defined as a function of the movement of the vehicle (V) and of the detection sensors (C); and
- determining whether an obstacle (0) is situated on the trajectory (TR) of the vehicle (V), as a function of said probabilities (PZs) and of said dynamic zones (Zd).

11. Computer program product (PG) comprising one or more sequences of instructions that can be executed by an information processing unit, the execution of said sequences of instructions allowing an implementation of the method according to any one of the preceding Claims 1 to 8.

**DEF_NCR**

| NCR1=f(C) | NCR2=f(Vit) |
|---|---|
| NCR3=f(Do/α) | NCR3=f(VitR) |

**1**

**DEF_OTR**

DEF_NP(Dc) — **2a**

DEF_Zs(NP) — **2b**

DEF_Zd — **2c**

DETECT_OTR(Zs, Zd) — **2d**

**2**

DEC(NCR, O) — **3**

**FIG. 1**

**FIG. 2**

**FIG. 3**

**FIG. 4**

**FIG. 5**

**V**

**DISP**

**UC**

**PG**

**DEF_NCR**

| NCR1=f(C) | NCR2=f(Vit) |
|-----------|-------------|
| NCR3=f(Do/α) | NCR3=f(VitR) |

**DEF_OTR**

**DEF_OTR**

**DEF_NP(Dc)**

**DEF_Zs(NP)**

**DEF_Zd**

**DETECT_REM**

**DEC(NCR, O)**

**C1, C2, C3, C4, C5, C6, C7, C8**

**FIG. 6**

19

**FIG. 7**

**EP 2 221 635 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1332910 A
- US 20060267748 A